# EUROPEAN PATENT SPECIFICATION

(11) **EP 3 778 808 B1**
(45) Date of publication and mention of the grant of the patent: **18.10.2023**
(21) Application number: 19784857.5
(22) Date of filing: 05.04.2019
(51) Int. Cl.: C09D 143/04, C09D 5/14, C09D 5/16, C09D 133/04, C08F 230/08, C08K 3/01

(54) **ANTIFOULING COATING COMPOSITION**
BEWUCHSHEMMENDE BESCHICHTUNGSZUSAMMENSETZUNG
COMPOSITION DE REVÊTEMENT ANTISALISSURE

(30) Priority: 12.04.2018 JP 2018076992
(43) Date of publication of application: 17.02.2021
(73) Proprietor: Nitto Kasei Co., Ltd., Osaka-shi Osaka 533-0031 (JP)
(72) Inventor: WAKU, Hidenori, Osaka 533-0031 (JP); MATSUKI, Takashi, Osaka 533-0031 (JP); KOBAYASHI, Satoshi, Osaka 533-0031 (JP); OKA, Nagato, Osaka 533-0031 (JP); YASUI, Takuya, Osaka 533-0031 (JP); ITO, Motomichi, Osaka 533-0031 (JP)
(74) Representative: Gulde & Partner
(86) International application number: PCT/JP2019/015087
(87) International publication number: WO 2019/198630

(56) References cited:
- EP-A1- 2 975 095
- WO-A1-2015/012148
- JP-A- 2000 017 203
- JP-A- 2003 176 444
- JP-A- 2004 035 881
- JP-A- 2005 082 725
- JP-A- 2012 005 934
- JP-A- 2016 089 167
- US-A1- 2011 166 253
- US-A1- 2011 172 325

## Description

### Technical Field

The present invention relates to an antifouling coating composition.

### Background Art

Aquatic fouling organisms such as barnacles, tubeworms, common mussels, Bugula neritina, sea squirts, green laver, sea lettuce, and slimes adhere to ships (especially ship bottoms), fishing tools such as fishing nets and fishing net accessories, and structures submerged in seawater such as power plant aqueducts, leading to dysfunction, impaired appearance, and other problems of the ships and the like.

In order to prevent such problems, a technique which forms an antifouling coating film by coating an antifouling coating composition on a ship and the like, and allows controlled release of an antifouling agent to realize an antifouling performance for a long time has been known (Patent Literature 1). Patent Literatures 2, 3, 4 and 5 disclosre further antifouling compositions.

### Citation List

### Patent Literature

[Patent Literature 1] JP 2000-17203 A
[Patent Literature 2] EP 2 975 095 A1
[Patent Literature 3] US 2011/172325 A1
[Patent Literature 4] US 2011/166253 A1
[Patent Literature 5] WO 2015/012148 A1

### Summary of Invention

### Technical Problem

In recent years, fouling by marine organisms has become extremely severe due to large changes in the marine environment such as the rise in seawater temperature and the like. Further, in water areas within bays such as Osaka Bay, Tokyo Bay, and Ise Bay, into which nutrient-rich water flows from rivers, the fouling caused by barnacles is extremely severe. Freshwater flowing from rivers into bays reduces the pH of seawater and the dissolution of the antifouling coating, resulting in an insufficient release of the antifouling agent. Therefore, even if the technique of Patent Literature 1 is adopted, there is a problem that the static antifouling performance is not maintained for a long time.

The present invention has been made by taking the afore-mentioned circumstances into consideration. The present invention provides a copolymer for an antifouling coating composition which can realize an excellent antifouling performance for a long time even in a bay where adhesion of fouling organisms is extremely severe and which can form an antifouling coating film with excellent seawater resistance.

### Solution to Problem

According to the present invention, according to appended claim 1, an antifouling coating composition, comprising: a copolymer P; and an antifouling agent; wherein: the copolymer P is a copolymer of a monomer (a), a monomer (b), a monomer (c), and an ethylenically unsaturated monomer (d) other than the monomers (a) to (c); the monomer (a) is represented by general formula (1); 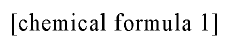 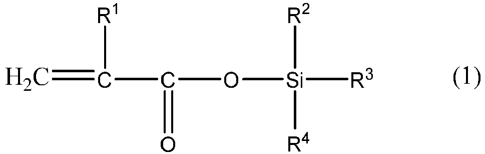 in the general formula (1), R¹ is a methyl group, R², R³, and R⁴are the same or different, and each represents a C3-C8 branched alkyl group or a phenyl group; a content of the monomer (a) is 25 to 50 mass% with respect to a total mass of the monomers (a) to (d); each of the monomer (b) and (c) is a monomer having a common logarithm log P of n-octanol/water partition coefficient P of 0.00 to 0.59 and 0.60 to 0.95; the monomer (c) is a monomer having only one unsaturated bond; is provided. Each of the monomer (b) and (c) is a monomer other than the monomer (a). The n-octanol/water partition coefficient P is a value of the ratio of the partition concentration of a substance to each phase of a two-phase solvent system consisting of n-octanol and water.

The present inventors have conducted intensive studies and have found that an antifouling coating film formed by using the antifouling coating composition using a predetermined copolymer can realize an excellent antifouling performance for a long time even in a bay, where adhesion of fouling organisms is extremely severe and the pH of seawater is low and has excellent seawater resistance, thereby completing the present invention.

### Description of Embodiments

Hereinafter, the present invention will be described in detail.

### 1. Antifouling coating composition

An antifouling coating composition of the present invention includes a copolymer P and an antifouling agent.

### 1-1. Copolymer P

The copolymer P is a copolymer of a monomer (a), a monomer (b), a monomer (c), and an ethylenically unsaturated monomer (d) other than the monomers (a) to (c). Each of the monomer (b) and (c) is a monomer other than the monomer (a).

### <Monomer (a)>

The monomer (a) is a triorganosilyl methacrylate monomer and is represented by the general formula (1).

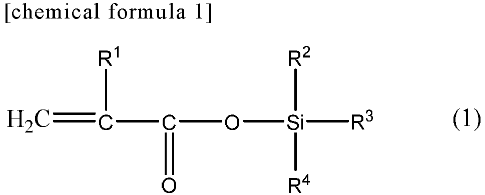

In the general formula (1), R¹ is a methyl group, R², R³, R⁴ are the same or different and each represents a C3-C8 branched alkyl group or a phenyl group.

Examples of the monomer (a) include triisopropylsilyl methacrylate, triisobutylsilyl methacrylate, tri-s-butylsilyl methacrylate, triisoamylsilyl methacrylate, tris(2-ethylhexyl)silyl methacrylate, triphenylsilyl methacrylate, diisopropylisobutylsilyl methacrylate, diisopropylisoamylsilyl methacrylate, diisopropyl(2-ethylhexyl)silyl methacrylate, diisopropylphenylsilyl methacrylate, diisopropylcyclohexyl silyl methacrylate, t-butyldiisopropylsilyl methacrylate, t-butyldiisobutylsilyl methacrylate, t-butyldiisoamylsilyl methacrylate, t-butyldiphenylsilyl methacrylate. Preferred is triisopropylsilyl methacrylate. These monomers can be used alone, or two or more of these can be used in combination.

From the viewpoint of having a static antifouling performance for a long time and not causing defects of the coating film, the content of the monomer (a) is 25 to 50mass% and particularly preferably 30 to 50 mass% with respect to the total mass of the monomers (a) to (d).

### <Monomer (b)>

The monomer (b) is a monomer copolymerizable with the monomers (a), (c), and (d), and has 0.00 to 0.59 of a common logarithm log P of n-octanol/water partition coefficient P.

The partition coefficient P is the value of the ratio of the partition concentration of a substance to each phase of the two-phase solvent system consisting of n-octanol and water, and log P is the common logarithm of the partition coefficient P. A large value of log P means high lipophilicity (low hydrophilicity). In the present specification, log P means a value calculated based on the Crippen's fragmentation method (J. Chem. Inf. Comput. Sci., 27, 21 (1987)). The log P by this method can be calculated using, for example, the program of ChemDraw Professional 17 Suite manufactured by PerkinElmer, Inc.

Examples of the monomer (b) include acrylate esters such as 2-[2-(2-hydroxyethoxy)ethoxy]ethoxy]ethylmethacrylate, mono(2-(meth)acryloyloxyethyl)succinate, N-(3-dimethylaminopropyl)(meth)acrylamide, 2-hydroxyethyl (meth)acrylate, 2-[2-(2-methoxyethoxy)ethoxy]ethyl (meth)acrylate, N,N' -dimethyl(meth)acrylamide, 2-(2-methoxyethoxy)ethyl acrylate, acrylic acid, hydroxypropyl acrylate, 2-(acetoacetyloxy)ethyl methacrylate, 2-(2-hydroxyethoxy)ethyl methacrylate, glycidyl (meth)acrylate, N-vinyl-2-pyrrolidone, 2-methoxyethyl acrylate, 2-[2-(2-ethoxyethoxy)ethoxy]ethyl acrylate, and vinyl compounds having a functional group such as vinyl acetate.

The monomer (b) preferably has a log P of 0.20 to 0.59 of and more preferably has a log P of 0.40 to 0.50 so that an excellent static antifouling performance for a long time is realized even in a bay where adhesion of fouling organisms is extremely severe. The value of log P is specifically, for example, 0.00, 0.05, 0.10, 0.15, 0.20, 0.25, 0.30, 0.35, 0.40, 0.45, 0.50, 0.55, 0.59, and may be in a range between any two of the numerical values exemplified here.

From the viewpoint of having a static antifouling performance for a long time and not causing defects of the coating film, the content of the monomer (b) is preferably 5 to 30mass% and more preferably 10 to 25mass% with respect to the total mass of the monomers (a) to (d).

### <Monomer (c)>

The monomer (c) is a monomer copolymerizable with the monomers (a), the monomer (b), and the monomer (d), and has a log P of n-octanol/water partition coefficient P of 0.60 to 0.95. Further, the monomer (c) has only one unsaturated bond.

Examples of the monomer (c) include acrylate esters such as 4-hydroxybutyl acrylate glycidyl ether, N-isopropyl acrylamide, 2-(dimethylamino)ethyl acrylate, methyl acrylate, 2-(2-ethoxyethoxy)ethyl acrylate, 2-(2-methoxyethoxy)ethyl methacrylate, methacrylic acid , 4-hydroxybutyl acrylate, tetrahydrofurfuryl acrylate, 3-chloro-2-hydroxypropyl acrylate, 2-ethoxyethyl acrylate, hydroxypropyl methacrylate, 2-methoxyethyl methacrylate, 2-[2-(2-ethoxyethoxy)ethoxy]ethyl methacrylate, N,N' -diethylacrylamide, 3-methoxybutyl acrylate, 2-hydroxybutyl acrylate, and vinyl compounds having a functional group such as acrylonitrile.

The monomer (c) preferably has a log P of 0.60 to 0.95 and more preferably has a log P of 0.70 to 0.90 so that an excellent static antifouling performance for a long time is realized even in a bay where adhesion of fouling organisms is extremely severe. The value of log P is specifically, for example, 0.60, 0.65, 0.70, 0.75, 0.80, 0.85, 0.90, 0.95, and may be in a range between any two of the numerical values exemplified here.

From the viewpoint of having a static antifouling performance for a long time and not causing defects of the coating film, the content of the monomer (c) is preferably 5 to 35mass% and more preferably 10 to 30mass% with respect to the total mass of the monomers (a) to (d).

### <Monomer (d)>

The monomer (d) is an ethylenically unsaturated monomer copolymerizable with the monomers (a), monomer (b), and the monomer (c).

Examples of the monomer (d) include methyl methacrylate, butyl (meth)acrylate, isobutyl (meth)acrylate, t-butyl (meth)acrylate, 2-ethylhexyl (meth)acrylate, lauryl (meth)acrylate, benzyl (meth)acrylate, phenyl (meth)acrylate.

### <Synthesis of copolymer (P)>

The copolymer (P) of the present invention can be obtained by copolymerizing a mixture of the monomers (a) to (d). The copolymerization is performed, for example, in the presence of a polymerization initiator.

The weight average molecular weight (Mw) of the copolymer is preferably 5,000 to 300,000. When the molecular weight is less than 5,000, the coating film of the antifouling coating becomes fragile and easily peels off or cracks, and when it exceeds 300,000, the viscosity of the copolymer solution increases and handling becomes difficult. This Mw is specifically, for example, 5000, 10000, 20000, 30000, 40,000, 50000, 60,000, 70,000, 80,000, 90,000, 100,000, 200,000, 300,000, and may be may be in the range between the two values exemplified herein.
the copolymer may be a random copolymer, an alternating copolymer, a periodic copolymer, or a block copolymer of the monomers (a) to (d).

Examples of the polymerization initiator include azo compounds such as 2,2'-azobisisobutyronitrile, 2,2'-azobis(2-methylbutyronitrile), 2,2' -azobis(2,4-dimethylvaleronitrile), dimethyl-2,2'-azobisisobutyrate, dimethyl-2,2' -azobisisobutyrate, 2,2' -azobis(N-butyl-2-methylpropionamide); peroxides such as benzoylperoxide, di-tert-butylperoxide, tert-butylperoxybenzoate, tert-butylperoxyisopropyl carbonate, t-butylperoxy-2-ethylhexanoate, t-hexylperoxy-2-ethylhexanoate, di-t-hexyl peroxide, t-butylperoxy-2-ethylhexyl monocarbonate, di-t-butyl peroxide, 1,1,3,3-tetramethylbutylperoxy neodecanoate, t-amyl peroxy neodecanoate, t-hexyl peroxypivalate, t-amyl peroxypivalate, 1,1,3,3-tetramethylbutylperoxy-2-ethylhexanoate. These polymerization initiators can be used alone or two or more of these can be used in combination. As the polymerization initiator, 2,2' -azobisisobutyronitrile, 2,2'-azobis(2-methylbutyronitrile), 2,2'-azobis(2,4-dimethylvaleronitrile), dimethyl 2,2'-azobisisobutyrate and 1,1,3,3-tetramethylbutylperoxy-2-ethylhexanoate are preferable. By suitably controlling the amount of the polymerization initiator being used, the molecular weight of the copolymer P can be adjusted

As the method of polymerization, solution polymerization, bulk polymerization, emulsion polymerization, suspension polymerization, non-aqueous dispersion polymerization and the like can be mentioned. Among these, in view of the capability of obtaining the copolymer simply with accuracy, solution polymerization and non-aqueous dispersion polymerization are preferable.

In the polymerization reaction, an organic solvent can be used if necessary. As the organic solvent, for example, aromatic hydrocarbon solvents such as xylene and toluene; aliphatic hydrocarbon solvents such as hexane, heptane, and mineral spirits; ester solvents such as ethyl acetate, butyl acetate, isobutyl acetate, methoxypropyl acetate, 2-methoxy-1-methylethyl acetate; alcohol solvents such as isopropyl alcohol, butyl alcohol, and 1-methoxy-2-propanol; ether solvents such as dioxane, diethyl ether, and dibutyl ether; ketone solvents such as methyl ethyl ketone, methyl isobutyl ketone, and cyclohexanone; and the like can be mentioned. Among these, aromatic hydrocarbon solvents are particularly preferable, and xylene is more preferable. These solvents may be used alone or two or more of these can be used in combination.

The reaction temperature in the polymerization reaction may be suitably controlled depending on the type of the polymerization initiator used and the like. The reaction temperature is usually 60 to 150°C, preferably 70 to 140°C. The reaction time in the polymerization reaction may be suitably controlled depending on the reaction temperature and the like and is usually about 4 to 10 hours.

The polymerization reaction is preferably performed in an inert gas atmosphere such as nitrogen gas or argon gas.

### 1-2. Antifouling agent

As the antifouling agent, for example, an inorganic chemical and an organic chemical can be mentioned.

As the inorganic chemical, for example, cuprous oxide, cuprous thiocyanate (generic name: rhodan copper), copper powder, and the like can be mentioned. Among these, cuprous oxide and rhodan copper are particularly preferable. From the viewpoint of long-term shelf stability, the cuprous oxide surface-treated with glycerin, sucrose, stearate, laurate, lecithin, mineral oil, and the like is more preferable.

As the organic chemical, for example, copper 2-mercaptopyridine-N-oxide (generic name: copper pyrithione), zinc 2-mercaptopyridine-N-oxide (generic name: zinc pyrithione), zinc ethylenebis(dithiocarbamate) (generic name: zineb), 4,5-dichloro-2-n-octyl-3-isothiazolone (generic name: Sea-nine 211), 3,4-dichlorophenyl-N-N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethyl pyrrole (generic name: ECONEA 28), (±)-4-[1-(2,3-dimethylphenyl)ethyl]-1H-imidazole (generic name: Medetomidine) can be mentioned.

These antifouling agents can be used alone, or two or more of these can be used in combination.

### 1-3. Other additives

Further, if necessary, the resin for antifouling coating of the present invention is added with an elution regulator, a plasticizer, a pigment, a dye, an antifoaming agent, a dehydrating agent, a thixotropic agent, an organic solvent, and the like to obtain the antifouling coating.

As the elution regulator, monocarboxylic acids and salts thereof, such as rosin, rosin derivatives, naphthenic acid, cycloalkenyl carboxylic acid, bicycloalkenyl carboxylic acid, versatic acid, trimethyl isobutenylcyclohexene carboxylic acid, and their metal salts, or the alicyclic hydrocarbon resins as mentioned above can be exemplified. These can be used alone, or two or more of these can be used in combination.

As the rosin derivatives, hydrogenated rosin, disproportionated rosin, maleic acid modified rosin, formylated rosin, polymerized rosin and the like can be exemplified.

As the alicyclic hydrocarbon resins, Quintone 1500, Quintone 1525L, and Quintone 1700 (product name, available from Zeon Corporation) and the like can be mentioned as commercially available products for example.

As the plasticizer, phosphate esters, phthalate esters, adipate esters, sebacate esters, epoxidized soybean oil, alkyl vinyl ether polymer, polyalkylene glycols, t-nonyl pentasulfide, petrolatum, polybutene, tris(2-ethylhexyl) trimellitate, silicone oil, liquid paraffin, chlorinated paraffin and the like can be exemplified. These can be used alone, or two or more of these can be used in combination.

As the dehydrating agent, for example, calcium sulfate, synthetic zeolite adsorbents, orthoesters, silicates such as tetramethoxysilane and tetraethoxysilane, isocyanates, carbodiimides, carbodiimidazoles, and the like can be mentioned. These can be used alone, or two or more of these can be used in combination.

### 2. Method for producing antifouling coating composition

The antifouling coating composition of the present invention can be manufactured, for example, by mixing and dispersing a mixed solution containing the copolymer P, the antifouling agent, other additives, and the like using a disperser.

Regarding the mixture solution, the ingredients such as the copolymer, the antifouling agent, and the like are preferably dissolved or dispersed in the solvent. As the solvent, the above organic solvent can be used.

As the disperser, for example, the one which can be used as a micro-pulverizer can be suitably used. For example, a commercially available homo mixer, sand mill, bead mill, and the like can be used. Furthermore, the mixed solution can be mixed and dispersed by using a stirrer-equipped container containing glass beads for mixing and dispersing.

### 3. Method for antifouling treatment, antifouling coating film, and coated object

The method for antifouling treatment of the present invention is characterized in that an antifouling coating film is formed using the above-explained antifouling coating composition on the surface of an object that is subjected to coating. The method for antifouling treatment of the present invention can prevent adhesion of aquatic fouling organisms by the gradual dissolution of the surface of the antifouling coating film such that the surface of the coating film is continually renewed.

Examples of objects on which the coating film can be formed include ships (in particular, ship bottoms), fishing tools, structures submerged in seawater, and the like.

The thickness of the antifouling coating film can be suitably selected depending on the type of the object on which the coating film is to be formed, the navigation speed of a ship, the seawater temperature, and the like. For example, when the object on which a coating film is formed is a ship bottom, the thickness of the antifouling coating film is usually 50 to 700 µm, and preferably 100 to 600 µm.

### EXAMPLES

Examples and the like are provided hereinafter, and further clarifies characteristics of the present invention. The present invention, however, is not limited to these Examples.

In each of Production Examples, Comparative Production Examples, Examples, and Comparative Examples, "%" denotes "% by mass". The viscosity was measured at 25°C using a Brookfield viscometer. The weight average molecular weight (Mw) was determined by gel permeation chromatography (GPC) (using a polystyrene standard). GPC was performed under the following conditions.
Equipment: HLC-8220 GPC (available from Tosoh Corporation)
Column: TSK-gel Super HZM-M, two columns used
Flow rate: 0.35 mL/min
Detector: RI
Column thermostat temperature: 40°C
Developing solvent: THF

The non-volatile content is a value determined in accordance with JIS K 5601-1-2:1999 (ISO 3251:1993) "Testing methods for paint components- Determination of non-volatile matter content".

Log P in Tables 1 to 4 is a value obtained using the program of ChemDraw Professional 17 Suite manufactured by PerkinElmer, Inc.

The formulation among of each component shown in Tables is represented in grams.

### <Production Example 1(Production of copolymer P1)>

To a four-necked flask equipped with a thermometer, reflux condenser, stirrer, and dropping funnel, 61 g of xylene (initial solvent) was charged, nitrogen gas was introduced, and the initial solvent was stirred while keeping at 88°C. A mixed solution of 30 g of a monomer (a), 31 g of methyl methacrylate, 4 g of n-butyl acrylate, 15 g of 2-methoxyethyl acrylate, 20 g of 2-methoxyethyl methacrylate, 0.8 g of 1,1,3,3-tetramethylbutylperoxy-2-ethylhexanoate (initial addition) was added dropwise over 3 hours while keeping the temperature at 88°C. Then, after stirring at 88°C for 1 hour, 0.1 g of 1,1,3,3-tetramethylbutylperoxy-2-ethylhexanoate (post addition) was added 3 times every hour. After stirring at the same temperature for 2 hours, 39 g of xylene (diluting solvent) was added and the mixture was cooled to room temperature to obtain a copolymer solution P1. The non-volatile content, Mw, and viscosity of P1 are shown in Table 1.

### <Production Examples 2 to 40, Comparative Production Examples 1 to 10>

The monomers, polymerization initiators, and solvents shown in Tables 1 to 4 were used, and a polymerization reaction was performed by processes similar to those of Example 1 under each reaction temperature condition, thereby obtaining copolymer solutions P2 to P40 and T1 to T10. The non-volatile content, Mw, and viscosity of P2 to P40 and T1 to T10 are shown in Tables 1 to 4. The numerical values of the compounding amounts in the tables are parts by mass. Further, the ratio of the monomer (a) in the tables shows the mass% of the monomer (a) with respect to 100 mass% of the total mass of the monomers (a) to (d).

### [Table 1]

**Table 1**

| component | | Production Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| initial solvent | xylene | 61 | 61 | 61 | 61 | 61 | 61 | 61 | 61 | 61 | 38 | 38 | 38 | 38 |
| monomer (a) | trisopropylsilyl methacrylate | 30 | 30 | 30 | 30 | 30 | 30 | 30 | 30 | 30 | 40 | 40 | 40 | 40 |
| monomer (b) | 2-methoxyethyl acrylate | 15 | 15 | 15 | | | | | | | 5 | 5 | 5 | |
| | Log P = 0.48 | | | | | | | | | | | | | |
| | hydroxypropyl acrylate | | | | 15 | 15 | 15 | | | | | | | 5 |
| | Log P = 0.44 | | | | | | | | | | | | | |
| | 2-(acetoacetyloxy)ethyl methacrylate | | | | | | | 15 | 15 | 15 | | | | |
| | Log P = 0.27 | | | | | | | | | | | | | |
| monomer (c) | 2-methoxyethyl methacrylate | 20 | | | 20 | | | 20 | | | 35 | | | 35 |
| | Log P = 0.83 | | | | | | | | | | | | | |
| | hydroxypropyl methacrylate | | 20 | | | 20 | | | 20 | | | 35 | | |
| | Log P = 0.79 | | | | | | | | | | | | | |
| | tetrahydrofurfuryl acrylate | | | 20 | | | 20 | | | 20 | | | 35 | |
| | Log P = 0.78 | | | | | | | | | | | | | |
| monomer (d) | methyl methacrylate | 31 | 31 | 31 | 29 | 28 | 31 | 26 | 27 | 29 | 16 | 16 | 18 | 14 |
| | n-butyl acrylate | 4 | 4 | 4 | 6 | 7 | 4 | 9 | 8 | 6 | 4 | 4 | 2 | 6 |
| ratio of monomer (a) | | 30% ' | 30% | 30% | 30% | 30% \| | 30% | 30% | 30% | 30% | 40% | 40% | 40% | 40% |
| polymerization initiator | initial addition | 0.8 | 0.8 | 0.8 | 0.8 | 0.8 | 0.8 | 0.8 | 0.8 | 0.8 | 1.0 | 1.0 | 1.0 | 1.0 |
| | post addition 3 times | 0.1 | 0.1 | 0.1 | 0.1 | 0.1 | 0.1 | 0.1 | 0.1 | 0.1 | 0.1 | 0.1 | 0.1 | 0.1 |
| diluting solvent | xylene | 39 | 39 | 39 | 39 | 39 | 39 | 39 | 39 | 39 | 62 | 62 | 62 | 62 |
| reaction temperature [°C] (within ±3°C) | | 88 | 88 | 88 | 88 | 88 | 88 | 88 | 88 | 88 | 85 | 85 | 85 | 85 |
| physical properties of copolymer solution | non-volatile content [%] | 50.6 | 49.7 | 50.5 | 49.6 | 49.5 | 49.9 | 49.7 | 49.9 | 49.5 | 49.5 | 49.5 | 49.5 | 49.4 |
| | viscosity [mPa·s] (25°C) | 760 | 590 | 610 | 880 | 890 | 600 | 520 | 920 | 595 | 480 | 670 | 225 | 430 |
| | weight average molecular weight [Mw] | 53900 | 49900 | 51600 | 50400 | 50300 | 50000 | 52100 | 50100 | 51000 | 49300 | 52100 | 50400 | 50100 |
| | solution | P1 | P2 | P3 | P4 | P5 | P6 | P7 | P8 | P9 | P10 | P11 | P12 | P13 |

### [Table 2]

**Table 2**

| component | | Production Example | | | | | | | | | | | | | |
|---|---|---|---|---|---|---|---|---|---|---|---|---|---|---|---|
| | | 14 | 15 | 16 | 17 | 18 | 19 | 20 | 21 | 22 | 23 | 24 | 25 | 26 | 27 |
| initial solvent | xylene | 38 | 38 | 38 | 38 | 38 | 32 | 32 | 32 | 32 | 32 | 32 | 32 | 32 | 32 |
| monomer (a) | trisopropylsilyl methacrylate | 40 | 40 | 40 | 40 | 40 | 50 | 50 | 50 | 50 | 50 | 50 | 50 | 50 | 50 |
| monomer (b) | 2-methoxyethyl acrylate | | | | | | 30 | 30 | 30 | | | | | | |
| | Log P = 0.48 | | | | | | | | | | | | | | |
| | hydroxypropyl acrylate | 5 | 5 | | | | | | | 30 | 30 | 30 | | | |
| | Log P = 0.44 | | | | | | | | | | | | | | |
| | 2-(acetoacetyloxy)ethyl methacrylate | | | 5 | 5 | 5 | | | | | | | 30 | 30 | 30 |
| | Loq P = 0.27 | | | | | | | | | | | | | | |
| monomer (c) | 2-methoxyethyl methacrylate | | | 35 | | | 5 | | | 5 | | | 5 | | |
| | Log P = 0.83 | | | | | | | | | | | | | | |
| | hydroxypropyl methacrylate | 35 | | | 35 | | | 5 | | | 5 | | | 5 | |
| | Log P = 0.79 | | | | | | | | | | | | | | |
| | tetrahydrofurfuryl acrylate | | 35 | | | 35 | | | 5 | | | 5 | | | 5 |
| | Loq P = 0.78 | | | | | | | | | | | | | | |
| monomer (d) | methyl methacrylate | 13 | 16 | 11 | 12 | 16 | 15 | 15 | 15 | 9 | 8 | 11 | 6 | 7 | 9 |
| | n-butyl acrylate | 7 | 4 | 9 | 8 | 4 | | | | 6 | 7 | 4 | 9 | 8 | 6 |
| ratio of monomer (a) | | 40% | 40% | 40% | 40% | 40% | 50% | 50% | 50% | 50% | 50% | 50% | 50% | 50% | 50% |
| polymerization initiator | initial addition | 1.0 | 1.0 | 1.0 | 1.0 | 1.0 | 1.0 | 1.0 | 1.0 | 1.0 | 1.0 | 1.0 | 1.0 | 1.0 | 1.0 |
| | post addition 3 times | 0.1 | 0.1 | 0.1 | 0.1 | 0.1 | 0.1 | 0.1 | 0.1 | 0.1 | 0.1 | 0.1 | 0.1 | 0.1 | 0.1 |
| diluting solvent | xylene | 62 | 62 | 62 | 62 | 62 | 68 | 68 | 68 | 68 | 68 | 68 | 68 | 68 | 68 |
| reaction temperature [°C) (within ±3°C) | | 85 | 85 | 85 | 85 | 85 | 85 | 85 | 85 | 85 | 85 | 85 | 85 | 85 | 85 |
| physical properties of copolymer solution | non-volatile content [%] | 49.5 | 49.5 | 49.7 | 49.6 | 49.8 | 49.6 | 49.5 | 49.7 | 50.5 | 49.7 | 49.8 | 49.6 | 49.6 | 49.6 |
| | viscosity [mPa·s] (25°C) | 625 | 445 | 520 | 610 | 450 | 265 | 270 | 225 | 300 | 320 | 310 | 305 | 275 | 290 |
| | weight average molecular weight [Mw] | 51200 | 49400 | 52100 | 50800 | 50400 | 51200 | 51800 | 50400 | 49600 | 50400 | 50300 | 50100 | 49700 | 49900 |
| | solution | P14 | P15 | P16 | P17 | P18 | P19 | P20 | P21 | P22 | P23 | P24 | P25 | P26 | P27 |

### [Table 3]

**Table 3**

| component | | Production Example | | | | | | | | | | | | |
|---|---|---|---|---|---|---|---|---|---|---|---|---|---|---|
| | | 28 | 29 | 30 | 31 | 32 | 33 | 34 | 35 | 36 | 37 | 38 | 39 | 40 |
| initial solvent | xylene | 61 | 38 | 32 | 73 | 73 | 73 | 46 | 46 | 46 | 38 | 38 | 38 | 38 |
| monomer (a) | trisopropylsilyl methacrylate | 30 | 40 | 50 | 36 | 36 | 36 | 48 | 48 | 48 | 60 | 60 | 60 | 60 |
| monomer (b) | 2-methoxyethyl acrylate | 15 | 5 | 8 | 18 | 17 | 17 | 6 | 6 | 6 | 10 | 36 | 15 | 36 |
| | Log P = 0.48 | | | | | | | | | | | | | |
| | hydroxypropyl acrylate Log P = 0.44 | | | | | | | | | | | | | |
| | 2-(acetoacetyloxy)ethyl methacrylate | | | | | | | | | | | | | |
| | Loq P = 0.27 | | | | | | | | | | | | | |
| monomer (c) | 2-methoxyethyl methacrylate | | | | | 24 | | | 42 | | | 6 | 34 | |
| | Log P = 0.83 | | | | | | | | | | | | | |
| | hydroxypropyl methacrylate | | | | | | | | | | | | | |
| | Log P = 0.79 | | | | | | | | | | | | | |
| | tetrahydrofurfuryl acrylate | | | | | | 24 | | | 42 | | | | 6 |
| | Log P = 0.78 | | | | | | | | | | | | | |
| | 2-(2-ethoxyethoxy)ethyl acrylate | 10 | 20 | 24 | 12 | | | 24 | | | 29 | | | |
| | Log P = 0.67 | | | | | | | | | | | | | |
| monomer (d) | methyl methacrylate | 42 | 35 | 18 | 50 | 37 | 37 | 42 | 19 | 22 | 21 | 18 | 6 | 18 |
| | n-butyl acrylate | 3 | | | 3.6 | 5 | 5 | | 5 | 2 | | | 5 | |
| ratio of monomer (a) | | 30% | 40% | 50% | 30% | 30% | 30 % | 40% | 40% | 40% | 50% | 50% | 50% | 50% |
| polymerization initiator | initial addition | 0.8 | 1.0 | 1.0 | 3.0 | 3.0 | 3.0 | 3.0 | 3.0 | 3.0 | 3.0 | 3.0 | 3.0 | 3.0 |
| | post addition 3 times | 0.1 | 0.1 | 0.1 | 0.1 | 0.1 | 0.1 | 0.1 | 0.1 | 0.1 | 0.1 | 0.1 | 0.1 | 0.1 |
| diluting solvent | xylene | 39 | 62 | 68 | 35 | 35 | 35 | 60 | 60 | ' 60 | 66 | 66 | ' 66 | 66 |
| reaction temperature [°C] (within ±3°C) | | 88 | 85 | 85 | 88 | 88 | 88 | 88 | 88 | 88 | 85 | 85 | 85 | 85 |
| physical properties of copolymer solution | non-volatile content [%] | 49.9 | 49.7 | 49.7 | 60.3 | 59.7 | 59.7 | 59.8 | 60.1 | 60.1 | 60.1 | 59.5 | 60.0 | 60.5 |
| | viscosity [mPa·s] (25°C) | 650 | 457 | 230 | 850 | 795 | 750 | 520 | 820 | 760 | 380 | 370 | 400 | 430 |
| | weight average molecular weight [Mw] | 50600 | 51700 | 50300 | 23600 | 21200 | 25500 | 22300 | 22300 | 24000 | 28400 | 24400 | 26800 | 26100 |
| | solution | P28 | P29 | P30 | P31 | P32 | P33 | P34 | P35 | P36 | P37 | P38 | P39 | P40 |

### [Table 4]

**Table 4**

| component | | Production Example | | | | | | | | | |
|---|---|---|---|---|---|---|---|---|---|---|---|
| | | 1 | 2 | 3 | 4 | 5 | 6 | 7 | 8 | 9 | 10 |
| initial solvent | xylene | 50 | 50 | 48 | 61 | 52 | 37 | 50 | 50 | 40 | 70 |
| monomer (a) | 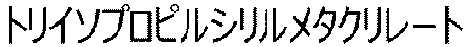 | 30 | 40 | 50 | 30 | 40 | 50 | 30 | 50 | 55 | 20 |
| monomer (b) | 2-methoxyethyl acrylate | 15 | 5 | 30 | | | | | | 30 | 20 |
| | Log P = 0.48 | | | | | | | | | | |
| | hydroxypropyl acrylate | | | | | | | | 40 | | |
| | Log P = 0.44 | | | | | | | | | | |
| | 2-(acetoacetyloxy)ethyl methacrylate | 20 | 35 | 5 | | | | | | | |
| | Log P = 0.27 | | | | | | | | | | |
| monomer (c) | 2-methoxyethyl methacrylate | | | | 15 | 5 | 30 | | | 5 | 20 |
| | Log P = 0.83 | | | | | | | | | | |
| | hydroxypropyl methacrylate | | | | | | | | | | |
| | Log P = 0.79 | | | | | | | | | | |
| | tetrahydrofurfuryl acrylate | | | | 20 | 35 | 5 | 35 | | | |
| | Log P = 0.78 | | | | | | | | | | |
| monomer (d) | methyl methacrylate | 31 | 15 | 15 | ' 27 | 16 | 10 | 29 | 10 | ' 10 | 40 |
| | n-butyl acrylate | 4 | 5 | | 8 | 4 | 5 | 6 | | | |
| ratio of monomer (a) | | 30% | 40% | 50% | 30% | 40% | 50% | 30% | 50% | 55% | 20% |
| polymerization initiator | initial addition | 1.0 | 1.0 | 1.0 | 0.8 | 1.0 | 1.0 | 1.0 | 1.0 | 1.0 | 1.0 |
| | cost addition 3 times | 0.1 | 0.1 | 0.1 | 0.1 | 0.1 | 0.1 | 0.1 | 0.1 | 0.1 | 0.1 |
| diluting solvent | xylene | 50 | 50 | 52 | 39 | 48 | 63 | 50 | 50 | 60 | 30 |
| reaction temperature [°C] (within ±5°C) | | 85 | 85 | 85 | 88 | 88 | 85 | 85 | 85 | 85 | 88 |
| physical properties of copolymer solution | non-volatile content [%] | 49.8 | 49.5 | 49.7 | 50.2 | 49.9 | 49.4 | 50.3 | 49.5 | 49.8 | 50.0 |
| | viscosity [mPa-s] (25°C) | 630 | 500 | 260 | 665 | 390 | 350 | 750 | 330 | 220 | 800 |
| | weight average molecular weight [Mw] | 49800 | 52500 | 50200 | 50000 | 51700 | 48900 | 51300 | 51000 | 49300 | 48800 |
| | solution | T1 | T2 | T3 | T4 | T5 | T6 | T7 | T8 | T9 | T10 |

### <Production Example 41 (Production of rosin zinc salt solution)>

To a flask equipped with a thermometer, a reflux condenser, and a stirrer, 240 g of Chinese gum rosin (WW) and 360 g of xylene were charged, and further, 120 g of zinc oxide was added so that all the resin acids in the said rosin formed zinc salt, and the mixture was refluxed and dehydrated under reduced pressure at 70-80°C for 3 hours. The mixture was then cooled and filtered to obtain a xylene solution of rosin zinc salt (dark brown transparent liquid, 50% solids). The non-volatile content of the solution obtained was 50.2%.

### <Production Example 42 (Production of hydrogenated rosin zinc salt solution)>

To a flask equipped with a thermometer, a reflux condenser, and a stirrer, 240 g of HYPALE CH (hydrogenated gum rosin) and 360 g of xylene were charged, and further, 120 g of zinc oxide was added so that all the resin acids in the said rosin formed zinc salt, and the mixture was refluxed and dehydrated under reduced pressure at 70-80°C for 3 hours. The mixture was then concentrated, cooled, and filtered to obtain a xylene solution of hydrogenated rosin zinc salt (dark brown transparent liquid, 65% solids). The non-volatile content of the solution obtained was 65.1%.

### <Examples 1 to 47, Comparison Examples 1 to 11>

Copolymer solutions obtained in the above Production Examples were used, and antifouling coating compositions of Examples and Comparative Examples were formulated by the content ratio shown in Tables 5 to 10.

### [Table 5]

**Table 5**

| component | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| copolymer solution (P) | P1 | | 25.8 | | | | | | | | | | |
| | P2 | | | 25.8 | | | | | | | | | |
| | P3 | | | | 25.8 | | | | | | | | |
| | P4 | | | | | 25.8 | | | | | | | |
| | P5 | | | | | | 25.8 | | | | | | |
| | P6 | | | | | | | 25.8 | | | | | |
| | P7 | | | | | | | | 25.8 | | | | |
| | P8 | | | | | | | | | 25.8 | | | |
| | P9 | | | | | | | | | | 25.8 | | |
| | P10 | | | | | | | | | | | 25.8 | |
| | P11 | | | | | | | | | | | | 25.8 |
| antifouling agent | cuprous oxide | | 37 | 37 | 37 | 37 | 37 | 37 | 37 | 37 | 37 | 37 | 37 |
| | copper pyrithione | | 2 | 2 | 2 | 2 | 2 | 2 | 2 | 2 | 2 | 2 | 2 |
| other additives | chlorinated paraffin | | 0.8 | 0.8 | 0.8 | 0.8 | 0.8 | 0.8 | 0.8 | 0.8 | 0.8 | 0.8 | 0.8 |
| | tris (2-ethylhexyl) trimellitic acid | | 0.4 | 0.4 | 0.4 | 0.4 | 0.4 | 0.4 | 0.4 | 0.4 | 0.4 | 0.4 | 0.4 |
| | rosin zinc salt solution | | 2 | 2 | 2 | 2 | 2 | 2 | 2 | 2 | 2 | 2 | 2 |
| | gum rosin solution | | 1 | 1 | 1 | 1 | 1 | 1 | 1 | 1 | 1 | 1 | 1 |
| | hydrogenated rosin solution | | 1 | 1 | 1 | 1 | 1 | 1 | 1 | 1 | 1 | 1 | 1 |
| | hydrogenated rosin zinc salt solution | | 5.4 | 5.4 | 5.4 | 5.4 | 5.4 | 5.4 | 5.4 | 5.4 | 5.4 | 5.4 | 5.4 |
| | red oxide | | 4 | 4 | 4 | 4 | 4 | 4 | 4 | 4 | 4 | 4 | 4 |
| | talc | | 11 | 11 | 11 | 11 | 11 | 11 | 11 | 11 | 11 | 11 | 11 |
| | zinc oxide | | 5 | 5 | 5 | 5 | 5 | 5 | 5 | 5 | 5 | 5 | 5 |
| | titanium oxide | | 0.5 | 0.5 | 0.5 | 0.5 | 0.5 | 0.5 | 0.5 | 0.5 | 0.5 | 0.5 | 0.5 |
| | Ethyl Silicate 28 | | 0.4 | 0.4 | 0.4 | 0.4 | 0.4 | 0.4 | 0.4 | 0.4 | 0.4 | 0.4 | 0.4 |
| | anhydrous gypsum | | 0.2 | 0.2 | 0.2 | 0.2 | 0.2 | 0.2 | 0.2 | 0.2 | 0.2 | 0.2 | 0.2 |
| | Disparlon A603-20X | | 0.4 | 0.4 | 0.4 | 0.4 | 0.4 | 0.4 | 0.4 | 0.4 | 0.4 | 0.4 | 0.4 |
| | Disparlon 4200-20 | | 0.3 | 0.3 | 0.3 | 0.3 | 0.3 | 0.3 | 0.3 | 0.3 | 0.3 | 0.3 | 0.3 |
| solvent | xylene | | 2.8 | 2.8 | 2.8 | 2.8 | 2.8 | 2.8 | 2.8 | 2.8 | 2.8 | 2.8 | 2.8 |
| sum | | | 100.0 | 100.0 | 100.0 | 100.0 | 100.0 | 100.0 | 100.0 | 100.0 | 100.0 | 100.0 | 100.0 |
| Test Example 1 rotary test | 6 months | pH 8.0~8.2 | 23.7 | 24.1 | 24.2 | 23.9 | 24.4 | 24.2 | 27.3 | 27.4 | 27.7 | 28.6 | 28.9 |
| | | pH 7.7~7.9 | 23.4 | 23.5 | 23.9 | 23.1 | 24.3 | 23.5 | 26.9 | 26.3 | 26.9 | 27.5 | 27.5 |
| | 9 months | pH 8.0~8.2 | 37.1 | 39.1 | 38.9 | 38.5 | 39.0 | 38.4 | 42.1 | 40.8 | 43.5 | 41.9 | 42.4 |
| | | pH 7.7~7.9 | 36.8 | 38.0 | 37.8 | 38.1 | 37.6 | 37.9 | 41.3 | 39.7 | 42.3 | 41.1 | 41.3 |
| Test Example 2 antifouling test | Osaka Bay | 6 months | A | A | A | A | A | A | A | A | A | A | A |
| | | 12 months | A | A | A | A | A | A | A | A | A | A | A |
| | Ise Bay | 6 months | A | A | A | A | A | A | A | A | A | A | A |
| | | 12 months | A | A | A | A | A | A | A | A | A | A | A |
| Test Example 3 seawater resistance test | Osaka Bay | 6 months | A | A | A | A | A | A | A | A | A | A | A |
| | | 12 months | A | A | A | A | A | A | B | B | B | A | A |
| | Ise Bay | 6 months | A | A | A | A | A | A | A | A | A | A | A |
| | | 12 months | A | A | A | A | A | A | B | B | B | A | A |

### [Table 6]

**Table 6**

| component | | | Example | | | | | | | | | | |
|---|---|---|---|---|---|---|---|---|---|---|---|---|---|
| | | | 12 | 13 | 14 | 15 | 16 | 17 | 18 | 19 | 20 | 21 | 22 |
| copolymer solution (P) | P12 | | 25.8 | | | | | | | | | | |
| | P13 | | | 25.8 | | | | | | | | | |
| | P14 | | | | 25.8 | | | | | | | | |
| | P15 | | | | | 25.8 | | | | | | | |
| | P16 | | | | | | 25.8 | | | | | | |
| | P17 | | | | | | | 25.8 | | | | | |
| | P18 | | | | | | | | 25.8 | | | | |
| | P19 | | | | | | | | | 25.8 | | | |
| | P20 | | | | | | | | | | 25.8 | | |
| | P21 | | | | | | | | | | | 25.8 | |
| | P22 | | | | | | | | | | | | 25.8 |
| antifouling agent | cuprous oxide | | 37 | 37 | 37 | 37 | 37 | 37 | 37 | 37 | 37 | 37 | 37 |
| | copper pyrithione | | 2 | 2 | 2 | 2 | 2 | 2 | 2 | 2 | 2 | 2 | 2 |
| other additives | chlorinated paraffin | | 0.8 | 0.8 | 0.8 | 0.8 | 0.8 | 0.8 | 0.8 | 0.8 | 0.8 | 0.8 | 0.8 |
| | tris (2-ethylhexyl) trimellitic acid | | 0.4 | 0.4 | 0.4 | 0.4 | 0.4 | 0.4 | 0.4 | 0.4 | 0.4 | 0.4 | 0.4 |
| | rosin zinc salt solution | | 2 | 2 | 2 | 2 | 2 | 2 | 2 | 2 | 2 | 2 | 2 |
| | gum rosin solution | | 1 | 1 | 1 | 1 | 1 | 1 | 1 | 1 | 1 | 1 | 1 |
| | hydrogenated rosin solution | | 1 | 1 | 1 | 1 | 1 | 1 | 1 | 1 | 1 | 1 | 1 |
| | hydrogenated rosin zinc salt solution | | 5.4 | 5.4 | 5.4 | 5.4 | 5.4 | 5.4 | 5.4 | 5.4 | 5.4 | 5.4 | 5.4 |
| | red oxide | | 4 | 4 | 4 | 4 | 4 | 4 | 4 | 4 | 4 | 4 | 4 |
| | talc | | 10 | 10 | 10 | 10 | 10 | 10 | 10 | 10 | 10 | 10 | 10 |
| | zinc oxide | | 5 | 5 | 5 | 5 | 5 | 5 | 5 | 5 | 5 | 5 | 5 |
| | titanium oxide | | 0.5 | 0.5 | 0.5 | 0.5 | 0.5 | 0.5 | 0.5 | 0.5 | 0.5 | 0.5 | 0.5 |
| | Ethyl Silicate 28 | | 0.4 | 0.4 | 0.4 | 0.4 | 0.4 | 0.4 | 0.4 | 0.4 | 0.4 | 0.4 | 0.4 |
| | anhydrous gypsum | | 1.2 | 1.2 | 1.2 | 1.2 | 1.2 | 1.2 | 1.2 | 1.2 | 1.2 | 1.2 | 1.2 |
| | Disparlon A603-20X | | 0.4 | 0.4 | 0.4 | 0.4 | 0.4 | 0.4 | 0.4 | 0.4 | 0.4 | 0.4 | 0.4 |
| | Disparlon 4200-20 | | 0.3 | 0.3 | 0.3 | 0.3 | 0.3 | 0.3 | 0.3 | 0.3 | 0.3 | 0.3 | 0.3 |
| solvent | xylene | | 2.8 | 2.8 | 2.8 | 2.8 | 2.8 | 2.8 | 2.8 | 2.8 | 2.8 | 2.8 | 2.8 |
| sum | | | 100.0 | 1100.0 | 100.0 | 100.0 | 100.0 | 100.0 | 100.0 | 100.0 | 100.0 | 100.0 | 100.0 |
| Test Example 1 rotary test | 6 months | pH 8.0∼8.2 | 29.5 | 29.1 | 29.3 | 29.3 | 32.4 | 33.3 | 33.7 | 49.0 | 49.4 | 49.2 | 49.5 |
| | | pH 7.7∼7.9 | 28.4 | 28.2 | 28.3 | 28.6 | 30.8 | 32.1 | 32.0 | 48.4 | 48.2 | 47.8 | 47.6 |
| | 9 months | pH 8.0∼8.2 | 43.3 | 42.7 | 42.1 | 44.3 | 49.2 | 49.8 | 50.0 | 72.7 | 73.1 | 74.0 | 75.2 |
| | | pH 7.7∼7.9 | 42.2 | 41.5 | 40.8 | 43.2 | 47.5 | 48.6 | 48.5 | 71.7 | 70.1 | 71.3 | 72.7 |
| Test Example 2 antifouling test | Osaka Bay | 6 months | A | A | A | A | A | A | A | A | A | A | A |
| | | 12 months | A | A | A | A | A | A | A | A | A | A | A |
| | Ise Bay | 6 months | A | A | A | A | A | A | A | A | A | A | A |
| | | 12 months | A | A | A | A | A | A | A | A | A | A | A |
| Test Example 3 seawater resistance test | Osaka Bay | 6 months | A | A | A | A | A | A | A | A | A | A | A |
| | | 12 months | A | A | A | A | A | A | A | A | A | A | A |
| | Ise Bay | 6 months | A | A | A | A | A | A | A | A | A | A | A |
| | | 12 months | A | A | A | A | A | A | A | A | A | A | A |

### [Table 7]

**Table 7**

| component | | | Example | | | | | | | | | | |
|---|---|---|---|---|---|---|---|---|---|---|---|---|---|
| | | | 23 | 24 | 25 | 26 | 27 | 28 | 29 | 30 | 31 | 32 | 33 |
| copolymer solution (P) | P1 | | | | | | | 25 | | | | | |
| | P3 | | | | | | | | 25 | | | | |
| | P10 | | | | | | | | | 25 | | | |
| | P12 | | | | | | | | | | 25 | | |
| | P19 | | | | | | | | | | | 25 | |
| | P21 | | | | | | | | | | | | 25 |
| | P23 | | 25.8 | | | | | | | | | | |
| | P24 | | | 25.8 | | | | | | | | | |
| | P25 | | | | 25.8 | | | | | | | | |
| | P26 | | | | | 25.8 | | | | | | | |
| | P27 | | | | | | 25.8 | | | | | | |
| antifouling agent | cuprous oxide | | 37 | 37 | 37 | 37 | 37 | | | | | | |
| | copper pyrithione | | 2 | 2 | 2 | 2 | 2 | 2 | 2 | 2 | 2 | 2 | 2 |
| | Copper (1) thiocyanate | | | | | | | 1 | 1 | 1 | 1 | 1 | 1 |
| | Zineb | | | | | | | 1 | 1 | 1 | 1 | 1 | 1 |
| | SeaNine | | | | | | | 1 | 1 | 1 | 1 | 1 | 1 |
| | Econea | | | | | | | 6 | 6 | 6 | 6 | 6 | 6 |
| | medetomidine | | | | | | | 0.1 | 0.1 | 0.1 | 0.1 | 0.1 | 0.1 |
| other additives | chlorinated paraffin | | 0.8 | 0.8 | 0.8 | 0.8 | 0.8 | 0.5 | 0.5 | 0.5 | 0.5 | 0.5 | 0.5 |
| | tris (2-ethylhexyl) trimellitic acid | | 0.4 | 0.4 | 0.4 | 0.4 | 0.4 | 0.5 | 0.5 | 0.5 | 0.5 | 0.5 | 0.5 |
| | rosin zinc salt solution | | 2 | 2 | 2 | 2 | 2 | 6.8 | 6.8 | 6.8 | 6.8 | 6.8 | 6.8 |
| | gum rosin solution | | 1 | 1 | 1 | 1 | 1 | 1 | 1 | 1 | 1 | 1 | 1 |
| | hydrogenated rosin solution | | 1 | 1 | 1 | 1 | 1 | 1 | 1 | 1 | 1 | 1 | 1 |
| | hydrogenated rosin zinc salt solution | | 5.4 | 5.4 | 5.4 | 5.4 | 5.4 | 14 | 14 | 14 | 14 | 14 | 14 |
| | red oxide | | 4 | 4 | 4 | 4 | 4 | 10 | 10 | 10 | 10 | 10 | 10 |
| | talc | | 10 | 10 | 10 | 10 | 10 | 10 | 10 | 10 | 10 | 10 | 10 |
| | zinc oxide | | 5 | 5 | 5 | 5 | 5 | 9 | 9 | 9 | 9 | 9 | 9 |
| | titanium oxide | | 0.5 | 0.5 | 0.5 | 0.5 | 0.5 | 7 | 7 | 7 | 7 | 7 | 7 |
| | Ethyl Silicate 28 | | 0.4 | 0.4 | 0.4 | 0.4 | 0.4 | 0.5 | 0.5 | 0.5 | 0.5 | 0.5 | 0.5 |
| | anhydrous gypsum | | 1.2 | 1.2 | 1.2 | 1.2 | 1.2 | 1.5 | 1.5 | 1.5 | 1.5 | 1.5 | 1.5 |
| | Disparlon A603-20X | | 0.4 | 0.4 | 0.4 | 0.4 | 0.4 | 0.5 | 0.5 | 0.5 | 0.5 | 0.5 | 0.5 |
| | Disparlon 4200-20 | | 0.3 | 0.3 | 0.3 | 0.3 | 0.3 | 0.3 | 0.3 | 0.3 | 0.3 | 0.3 | 0.3 |
| solvent | xylene | | 2.8 | 2.8 | 2.8 | 2.8 | 2.8 | 1.3 | 1.3 | 1.3 | 1.3 | 1.3 | 1.3 |
| sum | | | 100.0 | 100.0 | 100.0 | 100.0 | 100.0 | 100.0 | 100.0 | 100.0 | 100.0 | 100.0 | 100.0 |
| Test Example 1 rotary test | 6 months | pH 8.0~8.2 | 49.6 | 49.6 | 54.0 | 54.3 | 54.7 | 28.6 | 29.3 | 32.9 | 35.2 | 52.3 | 53.2 |
| | | pH 7.7~7.9 | 47.2 | 46.9 | 50.4 | 53.1 | 52.6 | 27.9 | 28.6 | 31.2 | 33.9 | 50.2 | 49.9 |
| | 9 months | pH 8.0~8.2 | 74.4 | 76.2 | 82.5 | 82.0 | 79.9 | 43.1 | 45.2 | 50.3 | 53.4 | 79.4 | 80.6 |
| | | pH 7.7~7.9 | 71.8 | 72.4 | 78.2 | 78.5 | 75.0 | 42.8 | 43.9 | 48.8 | 51.8 | 76.9 | 77.5 |
| Test Example 2 antifouling test | Osaka Bay | 6 months | A | A | A | A | A | A | A | A | A | A | A |
| | | 12 months | A | A | A | A | A | A | A | A | A | A | A |
| | Ise Bay | 6 months | A | A | A | A | A | A | A | A | A | A | A |
| | | 12 months | A | A | A | A | A | A | A | A | A | A | A |
| Test Example 3 seawater resistance test | Osaka Bay | 6 months | A | A | A | A | A | A | A | A | A | A | A |
| | | 12 months | A | A | B | B | B | A | A | A | A | A | A |
| | Ise Bay | 6 months | A | A | A | A | A | A | A | A | A | A | A |
| | | 12 months | A | A | B | B | B | A | A | A | A | A | A |

### [Table 8]

**Table 8**

| component | | | Example | | | | | | | | | |
|---|---|---|---|---|---|---|---|---|---|---|---|---|
| | | | 34 | 35 | 36 | 37 | 38 | 39 | 40 | 41 | 42 | 43 |
| copolymer solution (P) | P28 | | 25.8 | | | | | | | | | |
| | P29 | | | 25.8 | | | | | | | | |
| | P30 | | | | 25.8 | | | | | | | |
| | P31 | | | | | 25.8 | | | | | | |
| | P32 | | | | | | 25.8 | | | | | |
| | P33 | | | | | | | 25.8 | | | | |
| | P34 | | | | | | | | 25.8 | | | |
| | P35 | | | | | | | | | 25.8 | | |
| | P36 | | | | | | | | | | 25.8 | |
| | P37 | | | | | | | | | | | 25.8 |
| antifouling agent | cuprous oxide | | 37 | 37 | 37 | 37 | 37 | 37 | 37 | 37 | 37 | 37 |
| | copper pyrithione | | 2 | 2 | 2 | 2 | 2 | 2 | 2 | 2 | 2 | 2 |
| other additives | chlorinated paraffin | | 0.8 | 0.8 | 0.8 | | 0.5 | | | | | |
| | tris (2-ethylhexyl) trimellitic acid | | | | | 0.5 | 0.5 | 0.5 | 0.5 | 0.5 | 0.5 | 0.5 |
| | epoxidized soybean oil | | 0.4 | 0.4 | 0.4 | 0.5 | | 0.5 | 0.5 | 0.5 | 0.5 | 0.5 |
| | rosin zinc salt solution | | 2 | 2 | 2 | 2 | 2 | 2 | 2 | 2 | 2 | 2 |
| | gum rosin solution | | 1 | 1 | 1 | 1 | 1 | 1 | 1 | 1 | 1 | 1 |
| | hydrogenated rosin solution | | 1 | 1 | 1 | 1 | 1 | 1 | 1 | 1 | 1 | 1 |
| | hydrogenated rosin zinc salt solution | | 5.4 | 5.4 | 5.4 | 5.4 | 5.4 | 5.4 | 5.4 | 5.4 | 5.4 | 5.4 |
| | red oxide | | 4 | 4 | 4 | 4 | 4 | 4 | 4 | 4 | 4 | 4 |
| | talc | | 11 | 11 | 11 | 9 | 9 | 9 | 9 | 9 | 9 | 9 |
| | zinc oxide | | 5 | 5 | 5 | 9 | 9 | 9 | 9 | 9 | 9 | 9 |
| | titanium oxide | | 0.5 | 0.5 | 0.5 | | | | | | | |
| | Ethyl Silicate 28 | | 0.4 | 0.4 | 0.4 | 0.5 | 0.5 | 0.5 | 0.5 | 0.5 | 0.5 | 0.5 |
| | anhydrous gypsum | | 0.2 | 0.2 | 0.2 | 1 | 1 | 1 | 1 | 1 | 1 | 1 |
| | Disparlon A603-20X | | 0.4 | 0.4 | 0.4 | 0.1 | 0.1 | 0.1 | 0.1 | 0.1 | 0.1 | 0.1 |
| | Disparlon 4200-20 | | 0.3 | 0.3 | 0.3 | 0.2 | 0.2 | 0.2 | 0.2 | 0.2 | 0.2 | 0.2 |
| solvent | xylene | | 2.8 | 2.8 | 2.8 | 1.0 | 1.0 | 1.0 | 1.0 | 1.0 | 1.0 | 1.0 |
| sum | | | 100.0 | 100.0 | 100.0 | 100.0 | 100.0 | 100.0 | 100.0 | 100.0 | 100.0 | 100.0 |
| Test Example 1 rotary test | 6 months | pH 8.0∼8.2 | 20.4 | 24.4 | 40.1 | 11.0 | 13.9 | 12.5 | 40.5 | 38.9 | 37.8 | 30.5 |
| | | pH 7.7∼7.9 | 18.9 | 23.1 | 39.3 | 10.8 | 13.1 | 11.7 | 39.7 | 37.2 | 36.7 | 29.8 |
| | 9 months | pH 8.0∼8.2 | 34.5 | 50.1 | 65.0 | 18.0 | 22.7 | 20.4 | 50.7 | 49.3 | 48.6 | 60.8 |
| | | pH 7.7∼7.9 | 33.5 | 49.5 | 64.2 | 17.8 | 21.8 | 19.2 | 49.9 | 48.3 | 48.3 | 60.1 |
| Test Example 2 antifouling test | Osaka Bay | 6 months | A | A | A | A | A | A | A | A | A | A |
| | | 12 months | A | A | A | A | A | A | A | A | A | A |
| | Ise Bay | 6 months | A | A | A | A | A | A | A | A | A | A |
| | | 12 months | A | A | A | A | A | A | A | A | A | A |
| Test Example 3 seawater resistance test | Osaka Bay | 6 months | A | A | A | A | A | A | A | A | A | A |
| | | 12 months | A | A | A | A | A | A | A | A | A | A |
| | Ise Bay | 6 months | A | A | A | A | A | A | A | A | A | A |
| | | 12 months | A | A | A | A | A | A | A | A | A | A |

### [Table 9]

**Table 9**

| component | | | Example | | | | | | | | | |
|---|---|---|---|---|---|---|---|---|---|---|---|---|
| | | | 38 | 39 | 40 | 41 | 42 | 43 | 44 | 45 | 46 | 47 |
| copolymer solution (P) | P10 | | | | | 10 | | | | | | |
| | P28 | | | | | 15 | | | | | | |
| | P29 | | | | | | 25 | | | | | |
| | P30 | | | | | | | 25 | | | | |
| | P31 | | | | | | | | 15 | | | |
| | P32 | | | | | | | | | 15 | | |
| | P33 | | | | | | | | | | 15 | |
| | P35 | | | | | | | | | | | 15 |
| | P37 | | | | | | | | 10 | | | |
| | P38 | | 25.8 | | | | | | | 10 | | |
| | P39 | | | 25.8 | | | | | | | 10 | |
| | P40 | | | | 25.8 | | | | | | | 10 |
| antifouling agent | cuprous oxide | | 37 | 37 | 37 | 3 | 3 | 3 | 3 | 3 | 3 | 3 |
| | copper pyrithione | | 2 | 2 | 2 | 2 | 2 | 2 | 2 | 2 | 2 | 2 |
| | Copper (1) thiocyanate | | | | | 1 | 1 | 1 | 1 | 1 | 1 | 1 |
| | Zineb | | | | | 1 | 1 | 1 | 1 | 1 | 1 | 1 |
| | SeaNine | | | | | 1 | 1 | 1 | 1 | 1 | 1 | 1 |
| | Econea | | | | | 3 | 3 | 3 | 3 | 3 | 3 | 3 |
| | medetomidine | | | | | 0.1 | 0.1 | 0.1 | 0.1 | 0.1 | 0.1 | 0.1 |
| other additives | chlorinated paraffin | | | | 0.5 | 0.5 | | 0.5 | | 0.5 | | 0.5 |
| | tris (2-ethylhexyl) trimellitic acid | | 0.5 | 0.5 | 0.5 | 0.5 | 0.5 | 0.5 | 0.5 | 0.5 | 0.5 | 0.5 |
| | epoxidized soybean oil | | 0.5 | 0.5 | | | 0.5 | | 0.5 | | 0.5 | |
| | rosin zinc salt solution | | 2 | 2 | 2 | 6.8 | 6.8 | 6.8 | 6.8 | 6.8 | 6.8 | 6.8 |
| | gum rosin solution | | 1 | 1 | 1 | 1 | 1 | 1 | 1 | 1 | 1 | 1 |
| | hydrogenated rosin solution | | 1 | 1 | 1 | 1 | 1 | 1 | 1 | 1 | 1 | 1 |
| | hydrogenated rosin zinc salt solution | | 5.4 | 5.4 | 5.4 | 14 | 14 | 14 | 14 | 14 | 14 | 14 |
| | red oxide | | 4 | 4 | 4 | 10 | 10 | 10 | 10 | 10 | 10 | 10 |
| | talc | | 9 | 9 | 9 | 10 | 10 | 10 | 10 | 10 | 10 | 10 |
| | zinc oxide | | 9 | 9 | 9 | 9 | 9 | 9 | 9 | 9 | 9 | 9 |
| | titanium oxide | | | | | 7 | 7 | 7 | 7 | 7 | 7 | 7 |
| | Ethyl Silicate 28 | | 0.5 | 0.5 | 0.5 | 0.5 | 0.5 | 0.5 | 0.5 | 0.5 | 0.5 | 0.5 |
| | anhydrous gypsum | | 1 | 1 | 1 | 1.5 | 1.5 | 1.5 | 1.5 | 1.5 | 1.5 | 1.5 |
| | Disparlon A603-20X | | 0.1 | 0.1 | 0.1 | 0.5 | 0.5 | 0.5 | 0.5 | 0.5 | 0.5 | 0.5 |
| | Disparlon 4200-20 | | 0.2 | 0.2 | 0.2 | 0.3 | 0.3 | 0.3 | 0.3 | 0.3 | 0.3 | 0.3 |
| solvent | xylene | | 1.0 | 1.0 | 1.0 | 1.3 | 1.3 | 1.3 | 1.3 | 1.3 | 1.3 | 1.3 |
| sum | | | 100.0 | 100.0 | 100.0 | 100.0 | 100.0 | 100.0 | 100.0 | 100.0 | 100.0 | 100.0 |
| Test Example 1 rotary test | 6 months | pH 8.0∼8.2 | 50.1 | 48.3 | 53.2 | 29.3 | 28.3 | 46.1 | 20.8 | 29.2 | 30.7 | 45.7 |
| | | pH 7.7∼7.9 | 49.7 | 47.5 | 52.1 | 28.7 | 27.8 | 45.1 | 19.7 | 28.6 | 29.6 | 44.7 |
| | 9 months | pH 8.0∼8.2 | 62.3 | 60.2 | 78.4 | 47.8 | 60.1 | 78.0 | 40.9 | 43.1 | 41.7 | 65.4 |
| | | pH 7.7∼7.9 | 61.1 | 59.7 | 77.7 | 46.2 | 59.3 | 76.9 | 39.5 | 42.8 | 40.8 | 64.2 |
| Test Example 2 antifouling test | Osaka Bay | 6 months | A | A | A | A | A | A | A | A | A | A |
| | | 12 months | A | A | A | A | A | A | A | A | A | A |
| | Ise Bay | 6 months | A | A | A | A | A | A | A | A | A | A |
| | | 12 months | A | A | A | A | A | A | A | A | A | A |
| Test Example 3 seawater resistance test | Osaka Bay | 6 months | A | A | A | A | A | A | A | A | A | A |
| | | 12 months | A | A | A | A | A | A | A | A | A | A |
| | Ise Bay | 6 months | A | A | A | A | A | A | A | A | A | A |
| | | 12 months | A | A | A | A | A | A | A | A | A | A |

### [Table 10]

**Table 10**

| component | | | Comparative Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| copolymer solution | T1 | | 25.8 | | | | | | | | | | |
| | T2 | | | 25.8 | | | | | | | | | |
| | T3 | | | | 25.8 | | | | | | | | |
| | T4 | | | | | 25.8 | | | | | | | |
| | T5 | | | | | | 25.8 | | | | | | |
| | T6 | | | | | | | 25.8 | | | | | |
| | T7 | | | | | | | | 25.8 | | | | |
| | T8 | | | | | | | | | 25.8 | | | |
| | T9 | | | | | | | | | | 25.8 | | 25 |
| | T10 | | | | | | | | | | | 25.8 | |
| antifouling agent | cuprous oxide | | 37 | 37 | 37 | 37 | 37 | 37 | 37 | 37 | 37 | 37 | |
| | copper pyrithione | | 2 | 2 | 2 | 2 | 2 | 2 | 2 | 2 | 2 | 2 | 2 |
| | Copper (I) thiocyanate | | | | | | | | | | | | 1 |
| | Zineb | | | | | | | | | | | | 1 |
| | SeaNine | | | | | | | | | | | | 1 |
| | Econea | | | | | | | | | | | | 6 |
| | medetomidine | | | | | | | | | | | | 0.1 |
| other additives | chlorinated paraffin | | 0.8 | 0.8 | 0.8 | 0.8 | ' 0.8 | 0.8 | 0.8 | 0.8 | 0.8 | 0.8 | 0.5 |
| | tris (2-ethylhexyl) trimellitic acid | | 0.4 | 0.4 | 0.4 | 0.4 | 0.4 | 0.4 | 0.4 | 0.4 | 0.4 | 0.4 | 0.5 |
| | rosin zinc salt solution | | 2 | 2 | 2 | 2 | 2 | 2 | 2 | 2 | 2 | 2 | 6.8 |
| | gum rosin solution | | 1 | 1 | 1 | 1 | 1 | 1 | 1 | 1 | 1 | 1 | 1 |
| | hydrogenated rosin solution | | 1 | 1 | 1 | 1 | 1 | 1 | 1 | 1 | 1 | 1 | 1 |
| | hydrogenated rosin zinc salt solution | | 5.4 | 5.4 | 5.4 | 5.4 | 5.4 | 5.4 | 5.4 | 5.4 | 5.4 | 5.4 | 14 |
| | red oxide | | 4 | 4 | 4 | 4 | 4 | 4 | 4 | 4 | 4 | 4 | 10 |
| | talc | | 10 | 10 | 10 | 10 | 10 | 10 | 10 | 10 | 10 | 10 | 10 |
| | zinc oxide | | 5 | 5 | 5 | 5 | 5 | 5 | 5 | 5 | 5 | 5 | 9 |
| | titanium oxide | | 0.5 | 0.5 | 0.5 | 0.5 | 0.5 | 0.5 | 0.5 | 0.5 | 0.5 | 0.5 | 7 |
| | Ethyl Silicate 28 | | 0.4 | 0.4 | 0.4 | 0.4 | 0.4 | 0.4 | 0.4 | 0.4 | 0.4 | 0.4 | 0.5 |
| | anhydrous gypsum | | 1.2 | 1.2 | 1.2 | 1.2 | 1.2 | 1.2 | 1.2 | 1.2 | 1.2 | 1.2 | 1.5 |
| | Disparlon A603-20X | | 0.4 | 0.4 | 0.4 | 0.4 | 0.4 | 0.4 | 0.4 | 0.4 | 0.4 | 0.4 | 0.5 |
| | Disparlon 4200-20 | | 0.3 | 0.3 | 0.3 | 0.3 | 0.3 | 0.3 | 0.3 | 0.3 | 0.3 | 0.3 | 0.3 |
| solvent | xylene | | 2.8 | 2.8 | 2.8 | 2.8 | 2.8 | 2.8 | 2.8 | 2.8 | 2.8 | 2.8 | 1.3 |
| sum | | | 100.0 | 100.0 | 100.0 | 100.0 | 100.0 | 100.0 | 100.0 | 100.0 | 100.0 | 100.0 | 100.0 |
| Test Example 1 rotary test | 6 months | pH 8.0∼8.2 | 173.0 | 198.0 | 187.0 | 9.8 | 13.6 | 16.0 | 12.4 | 200.1 | 29.2 | 5.9 | 30.5 |
| | | pH 7.7∼7.9 | 129.0 | 147.3 | 142.1 | 5.1 | 6.9 | 6.4 | 6.4 | 152.0 | 5.6 | 3.2 | 6.9 |
| | 9 months | pH 8.0∼8.2 | * | * | * | 14.9 | 20.9 | 24.8 | 19.4 | * | 45.1 | 9.4 | 46.5 |
| | | pH 7.7∼7.9 | * | * | * | 7.5 | 9.8 | 9.1 | 9.5 | * | 7.9 | 4.3 | 9.5 |
| Test Example 2 antifouling test | Osaka Bay | 6 months | A | A | A | C | B | B | B | A | A | C | A |
| | | 12 months | A | A | A | C | C | C | C | A | C | C | C |
| | Ise Bay | 6 months | A | A | A | C | C | C | C | A | C | C | C |
| | | 12 months | A | A | A | C | C | C | C | A | C | C | C |
| Test Example 3 seawater resistance test | Osaka Bay | 6 months | B | B | B | A | A | A | A | B | A | A | A |
| | | 12 months | C | C | C | A | A | A | A | C | A | A | A |
| | Ise Bay | 6 months | B | B | B | A | A | A | A | B | A | A | A |
| | | 12 months | C | C | C | A | A | A | A | C | A | A | A |

| | | | | | | | | | | | | | |
|---|---|---|---|---|---|---|---|---|---|---|---|---|---|
| ∗The coating film was completely dissolved. | | | | | | | | | | | | | |

The details of the antifouling agents and other additives in Tables 5 to 10 are as follows.

### <Antifouling agent>

cuprous oxide: product name "NC-301" (available from NISSIN CHEMCO LTD.)
copper pyrithione: product name "copper Omadine" (available from Arch Chemical, Inc.)
Copper (I) thiocyanate: product name "Copper(I) Thiocyanate" (available from Wako Pure Chemical Industries, Ltd.)
Zineb: product name "Zineb" (available from Sigma-Aldrich, Inc.)
Sea Nine: product name "Sea Nine 211" (4,5-dichloro-2-n-octyl-3-isothiazoline, 30% solids, xylene solution, available from Rohm & Haas, Inc.)
Econia: product name "Econea 028" 2-(p-chlorophenyl)3-cyano-4-bromo-5-trifluoromethyl pyrrole, (available from JANSSEN PMP)
medetomidine: product name "4-(1-(2,3-Dimethylphenyl) ethyl)-1H-imidazole" (available from Wako Pure Chemical Industries, Ltd.)

### <other additives>

chlorinated paraffin; product name "EMPARA A-40S" (available from Tosoh Corporation)
tris (2-ethylhexyl) trimellitic acid: product name "Tris (2-ethylhexyl) trimellitic acid" (available from TOKYO CHEMICAL INDUSTRY CO., LTD.)
rosin zinc salt solution: The one produced in Production Example 41 was used.
gum rosin solution: xylene solution (50% solids) of Chinese gum rosin (WW)
hydrogenated rosin solution: xylene solution (50% solids) of product name "HYPALE CH" (available from ARAKAWA CHEMICAL INDUSTRIES, LTD.)
hydrogenated rosin zinc salt solution: The one produced in Production Example 42 was used.
red oxide: product name "Bengarakingyoku" (available from Morishitabengara Corporation)
talc: product name "CROWN TALC 3S" (available from matsumura sangyo Co., Ltd.)
zinc oxide: product name "zinc oxide II" (available from Seido Chemical Industry Co., Ltd.)
titanium oxide: product name "FR-41" (available from FURUKAWA CO., LTD.)
Ethyl Silicate 28: tetraethoxysilane: product name "Ethyl Silicate 28" (available from COLCOAT CO., LTD.)
anhydrous gypsum: product name "D-1" (NORITAKE CO., LIMITED)
Disparlon A603-20X: amide thixotropic agent: product name "Disparlon A603-20X" (available from Kusumoto Chemicals, Ltd.)
Disparlon 4200-20: polyethylene oxide thixotropic agent: product name "Disparlon 4200-20" (available from Kusumoto Chemicals, Ltd.)

### <Test Example 1 (Dissolution test of coating film (rotary test))>

A rotating drum with a diameter of 515 mm and a height of 440 mm was attached to the center of the water tank so that it could be rotated by a motor. Further, two rotary testers equipped with a cooling device for keeping the temperature of seawater constant and a pH automatic controller for keeping the pH of seawater constant were prepared.

A test plate was prepared according to the following method.

First, a rust preventive coating (epoxy vinyl A/C) was applied on a titanium plate (71 × 100× 0.5 mm) and dried so that the thickness of the film after drying is about 100 µm. Then, each of the coating compositions obtained in Examples and Comparative Examples was applied on the rust preventive coating film so that the thickness after drying was about 200 µm. Test plates were prepared by drying at 40°C for 3 days. Two identical test plates were prepared for each coating composition.

The prepared test plate was fixed to the rotary drum of the rotary device of the above device so that it came into contact with seawater, and the rotary drum was rotated at a speed of 20 knots.
During rotating, the temperature of seawater was kept at 25°C, the pH of the first unit was kept at 7.7 to 7.9, the pH of the second unit was kept at 8.0 to 8.2, and the seawater was replaced every two weeks.

The initial film thickness and the remaining film thickness after 6 months and 9 months were measured with a shape measurement laser microscope VK-X100 manufactured by Keyence Corporation, and from the difference of the film thicknesses, the thickness of coating film dissolved was calculated to obtain the amount of coating film dissolved. The results are shown in Tables 5 to 10. The numerical values in the tables are the total dissolved amounts after 6 months and 9 months, respectively.

### <Test Example 2 (antifouling test)>

Each of the antifouling coating compositions obtained in Examples and Comparative Examples was applied on both sides of a hard vinyl chloride board (100×200×2 mm) so that the thickness of the coating film after drying was about 200 µm, and dried at room temperature for 3 days to obtain a test plate. This test plate was immersed for 12 months in 2.0 m below sea level in Osaka Bay and Ise Bay, where adhesion of fouling organisms is extremely severe, and fouling on the test plate caused by adhesion was observed after 6 months and 12 months. The evaluation was determined according to the following criteria by visually observing the condition of the coating film surface. The results are shown in Tables 5 to 10.

A: Level where and no fouling organisms such as shellfish and algae adhere and slime adheres
B: Level where fouling organisms such as shellfish and algae adhere to part of the surface
C: Level where fouling organisms such as shellfish and algae adhere to the entire surface

### <Test Example 3 (seawater resistance test)>

The condition of the coating film was observed at the same time on the same test plate as in Test Example 2 and evaluated according to the following criteria. The results are shown in Tables 5 to 10.
A: None of blisters, cracks, and peelings were observed on the coating film.
B: Blisters were observed on the coating film.
C: Blisters, cracks, and peelings were observed on the coating film.

### <Discussion>

In all Examples, good results were obtained in Test Examples 1 to 3.

In Comparative Examples 1 to 8 using a copolymer having only one of the monomers (b) and (c) and Comparative Examples 9 to 11 using the copolymer having content outside the range of 25 to 50mass% with respect to the total content of the monomers (a) to (d), good results were not obtained in at least one of Test Examples 1 to 3.

## Claims

1. An antifouling coating composition, comprising:
a copolymer P; and
an antifouling agent; wherein:
the copolymer P is a copolymer of a monomer (a), a monomer (b), a monomer (c), and an ethylenically unsaturated monomer (d) other than the monomers (a) to (c);
the monomer (a) is represented by general formula (1); 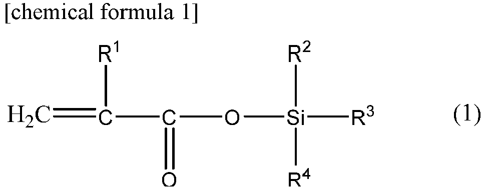
in the general formula (1), R¹ is a methyl group, R², R³, and R⁴ are the same or different, and each represents a C3-C8 branched alkyl group or a phenyl group;
a content of the monomer (a) is 25 to 50 mass% with respect to a total mass of the monomers (a) to (d);
each of the monomers (b) and (c) is a monomer other than the monomer (a) and has a common logarithm log P (as calculated according to the description) of n-octanol/water partition coefficient P of 0.00 to 0.59 and 0.60 to 0.95, wherein the n-octanol/water partition coefficient P is a value of the ratio of the partition concentration of a substance to each phase of a two-phase solvent system consisting of n-octanol and water; and
the monomer (c) is a monomer having only one unsaturated bond.

## Patentansprüche

1. Antifouling-Beschichtungszusammensetzung, umfassend:
ein Copolymer P; und
ein Antifoulingmittel; wobei:
das Copolymer P ein Copolymer aus einem Monomer (a), einem Monomer (b), einem Monomer (c) und einem ethylenisch ungesättigten Monomer (d) ist, das von den Monomeren (a) bis (c) verschieden ist;
das Monomer (a) durch die allgemeine Formel (1) dargestellt wird; 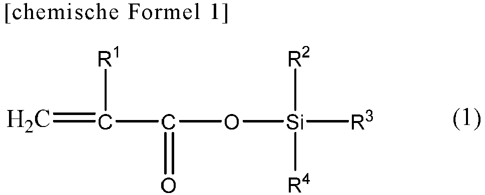
wobei in der allgemeinen Formel (1) R¹ eine Methylgruppe ist, R², R³ und R⁴ gleich oder verschieden sind und jeweils eine verzweigte C3-C8-Alkylgruppe oder eine Phenylgruppe darstellen;
ein Gehalt des Monomers (a) 25 bis 50 Masse-%, bezogen auf die Gesamtmasse der Monomere (a) bis (d), beträgt;
jedes der Monomere (b) und (c) ein anderes Monomer als das Monomer (a) ist und einen dekadischen Logarithmus log P (wie gemäß der Beschreibung berechnet) des n-Octanol/Wasser-Verteilungskoeffizienten P von 0,00 bis 0,59 und 0,60 bis 0,95 aufweist, wobei der n-Octanol/Wasser-Verteilungskoeffizient P ein Wert des Verhältnisses der Verteilungskonzentration einer Substanz zu jeder Phase eines Zweiphasen-Lösungsmittelsystems ist, das aus n-Octanol und Wasser besteht; und
das Monomer (c) ein Monomer mit nur einer ungesättigten Bindung ist.

## Revendications

1. Composition de revêtement antisalissure, comprenant :
un copolymère P ; et
un agent antisalissure ; dans lequel :
le copolymère P est un copolymère d'un monomère (a), d'un monomère (b), d'un monomère (c) et d'un monomère éthyléniquement insaturé (d) autre que les monomères (a) à (c) ;
le monomère (a) est représenté par la formule générale (1) ; 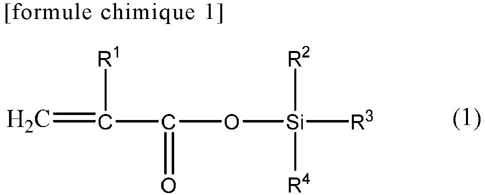
dans la formule générale (1), R¹ étant un groupe méthyle, R², R³ et R⁴ étant identiques ou différents et représentant chacun un groupe alkyle ramifié en C3-C8 ou un groupe phényle ;
la teneur en monomère (a) est de 25 à 50 % en masse par rapport à la masse totale des monomères (a) à (d) ;
chacun des monomères (b) et (c) est un monomère autre que le monomère (a) et a un logarithme décimal log P (calculé selon la description) du coefficient de partage n-octanol/eau P de 0,00 à 0,59 et de 0,60 à 0,95, où le coefficient de partage n-octanol/eau P est une valeur du rapport de la concentration de partage d'une substance dans chaque phase d'un système de solvant à deux phases constitué de n-octanol et d'eau ; et
le monomère (c) est un monomère ne comportant qu'une seule liaison insaturée.
